# EUROPEAN PATENT APPLICATION

(11) **EP 1 662 401 A2**
(43) Date of publication of application: **31.05.2006**
(21) Application number: 05251174.8
(22) Date of filing: 28.02.2005
(51) Int. Cl.: G06F 12/08

(54) **Memory control device and memory control method**

(30) Priority: 26.11.2004 JP 2004342802
(71) Applicant: FUJITSU LIMITED, Kawasaki-shi, Kanagawa 211-8588 (JP)
(72) Inventor: Matsui, Takao, Fujitsu Limited, Kawasaki-shi Kanagawa 211-8588 (JP); Okada, Seishi, Fujitsu Limited, Kawasaki-shi Kanagawa 211-8588 (JP); Itoh, Daisuke, Fujitsu Limited, Kawasaki-shi Kanagawa 211-8588 (JP); Hataida, Makoto, Fujitsu Limited, Kawasaki-shi Kanagawa 211-8588 (JP); Ueki, Toshikazu, Fujitsu Limited, Kawasaki-shi Kanagawa 211-8588 (JP)
(74) Representative: Mohun, Stephen John

(57) **Abstract**

Address information of target data is stored in an ELA register at the start of a cache excluding process performed by BackEviction, and a request processing unit continuously re-executes a data acquiring process while an address of data requested to be acquired by a processor is present in the ELA register. The address information of the target data is stored in an EWB buffer at the start of autonomous move-out performed by a processor, and the cache excluding process performed by BackEviction is stopped when the address of data subjected to BackEviction is present in the EWB buffer.

## Description

### BACKGROUND OF THE INVENTION

### 1) Field of the Invention

The present invention relates a technology for reliably maintaining consistency between caches.

### 2) Description of the Related Art

In recent years, to account for a difference in speeds of processors and main memories connected to the processors, often cache memories are provided in the processors. Although this results into higher processing speed, the cache memories are have considerably smaller storing capacity than the main memories so that only a small part of the data in the main memories can be stored in the cache memories. Therefore, only the data that is frequently used are sequentially stored in turn in the cache memories. The operation of overwriting new data read form the main memory on the old data existing in the cache memory is called cache replace.

A technique for performing the cache replace is disclosed in, for example, Japanese Patent Application Laid-Open No. H10-55305. How the cache replace operation is performed in a multiprocessor system is explained is detail below.

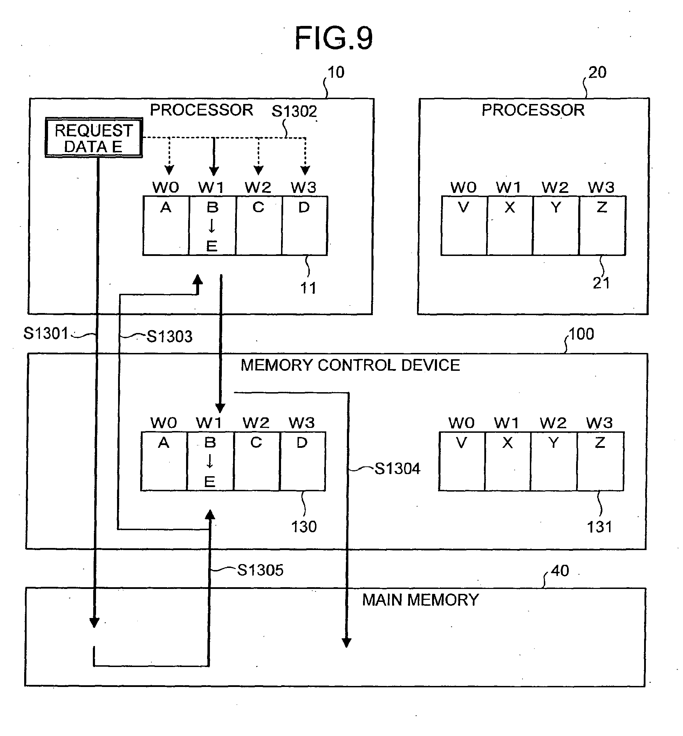

Fig. 9 is a schematic for explaining the cache replace operation. The structure shown in Fig. 9 a multiprocessor system, a memory control dvice 100, and a main memory 40. The multiprocessor system includes two processors 10 and 20. The processor 10 includes a cache memory 11 and the processor 20 includes a cache memory 21. It is assumed that the cache memories 11 and 21 are controlled by a 4-Way, W0 to W3, set associative scheme. It is also assumed that all the four Ways of a certain cache index are in a valid state, and that data A to D are stored in the four Ways, respectively.

The processors 10 and 20 communicate with the main memory 40 via the memory control device 100. The memory control device 100 performs input/output control of data between the processors 10 and 20 and the main memory 40 and includes two TAG-RAMs 130 and 131 to efficiently perform consistency control of the caches. Respective TAG-RAMs 130 and 131 store address information of data stored in the cache memories 11 and 21, respectively.

For the purpose of explanation, it is assumed that the processor 10 requests data E of the same cache index as that of the data A to D from the main memory 40 (step S1301). Then, the processor 10 refers to the cache memory 11 to determine a position where the data E is stored in the cache. Because all the Ways are valid, the processor 10 determines that any one Way must be made invalidated. It is assumed that the processor 10 selects W1 as a block to be made invalid (step S 1302).

The processor 10 performs a cache excluding process that includes excluding the old data B inform the W1 and invalidating the block from which the data B is excluded. Subsequently, the processor 10 informs the memory control device 100 that the cache excluding process for the data B is over (step S1303). In response to this, the memory control device 100 invalidates W 1 of the TAG-RAM 130 and writes the data B excluded by the processor 10 in the main memory 40.

Thereafter, the main memory 40 sends the data E to the memory control device 100. The memory control device 100 receives the data E and stores the address information of the data E in W1 of the TAG-RAM 130 and sends the data E to the processor 10. The processor 10 receives the data E and stores the data E in W1. This completes the cache replace operation.

Thus, in the conventional approach, not only the contents in the cache memories are updated, but also the contents in the TAG-RAM are updated. The memory control device determines an input/output route of data with reference to the TAG-RAM. Therefore, conformity of the contents of the cache memory of the processor to the contents of the TAG-RAM of the memory control device is an absolutely imperative requirement in execution of consistency management of the cache.

However, some of the known processors do not inform the memory control device of information related to the cache excluding process. If the multiprocessor system includes such a processor, the contents in the TAG-RAM cannot be conformed to the contents in the cache memory so that the memory control device cannot keep a consistency between the caches. One approach is not to provide the TAG-RAM at all, however, in that case, it becomes necessary to check the presence/absence of caches in all the processors each time memory access, which reduces the system performance.

### SUMMARY OF THE INVENTION

It is an object of the present invention to at least solve the problems in the conventional art.

According to an aspect of the present invention, a memory control device that is connected between a main memory and a plurality of processors each having a cache memory and that controls access by the processors to the main memory includes a tag-information storing unit having a plurality of blocks that stores address information of data held in the cache memory, wherein the blocks can be validated or invalidated; a request processing unit that processes a memory access request of the processors and that, when any one of the blocks of the tag-information storing unit must be invalidated, requests a processor of which the cache memory holds a to-be-excluded data, which is same as the data stored in the block of the tag-information storing unit that is to be invalidated, to perform a cache excluding process of excluding the to-be-excluded data from the cache memory to the main memory; an exclusion-target data storing unit that, when the request processing unit requests the processor to perform the cache excluding process, stores address information of the to-be-excluded data in one entry until the processor completes the cache excluding process; and a re-execution deciding unit that, when an acquisition route deciding process of acquiring data requested by the processors is fixed by the request processing unit and, checks the address information stored in the exclusion-target data storing unit and causes the request processing unit to re-execute the acquiring route deciding process of the data if address information of the requested data is included in any one of the entries.

According to an aspect of the present invention, a method of controlling access to a main memory by a plurality of processors each having a cache memory includes processing a memory access request of the processors and, when any one of blocks of a tag information storing unit that holds address information of data held in a cache memory of a processor must be invalidated, requesting a processor of which the cache memory holds a to-be-excluded data, which is same as the data stored in the block of the tag-information storing unit that is to be invalidated, to perform a cache excluding process of excluding the to-be-excluded data from the cache memory to the main memory; storing address information of the to-be-excluded data in one entry of an exclusion-target data storing unit until the processor completes the cache excluding process when the processor is requested at the processing step to perform the cache excluding process; and checking the address information stored in the exclusion-target data storing unit, when an acquisition route deciding process of acquiring data requested by any one of the processors is fixed in the processing step and causing the processing step to be re-executed to as to re-execute the acquiring route deciding process of the data if address information of the requested data is included in any one of the entries.

The other objects, features, and advantages of the present invention are specifically set forth in or will become apparent from the following detailed description of the invention when read in conjunction with the accompanying drawings.

### BRIEF DESCRIPTION OF THE DRAWINGS

Fig. 1 is a functional block diagram of a memory control device according to an embodiment of the present invention;
Fig. 2 is a schematic for explaining a registering/releasing operation performed by an EWB buffer shown in Fig. 1;
Fig. 3 is a schematic for explaining a registering operation performed by an ELA register shown in Fig. 1;
Fig. 4 is a schematic for explaining another registering operation performed by the ELA register shown in Fig. 1;
Fig. 5 is a schematic for explaining an operation of a re-execution deciding unit shown in Fig. 1;
Fig. 6 is a schematic for explaining an operation of a cancel deciding unit shown in Fig. 1;
Fig. 7 is a schematic for explaining an example of an operation performed when data of the same line is requested to be acquired by another processor before completion of BackEviction;
Fig. 8 is a schematic for explaining an example of an operation performed when a line subjected to BackEviction is invalidated by autonomous move-out;
Fig. 9 is a schematic for explaining an example of a cache replace operation;
Fig. 10 is a schematic for explaining an example of a cache replace operation with BackEviction;
Fig. 11 is a schematic for explaining an example of an operation performed when data of the same line is requested to be acquired by another processor before BackEviction is completed; and
Fig. 12 is a schematic for explaining an example of an operation performed when a line subjected to BackEviction is invalidated by autonomous move-out.

### DETAILED DESCRIPTION

Exemplary embodiments of the present invention will be described below with reference to the accompanying drawings.

A memory control method called BackEviction is used in the present invention. However, BackEviction has certain drawbacks that will be described first.

When a multiprocessor system is structured by using a processor that communicates information related to a cache excluding process to a memory control device, most of the problems can be solved by causing the memory control device to designate the processor to perform the cache excluding process. The process of the memory control device designating the processor to perform the cache excluding process is called BackEviction.

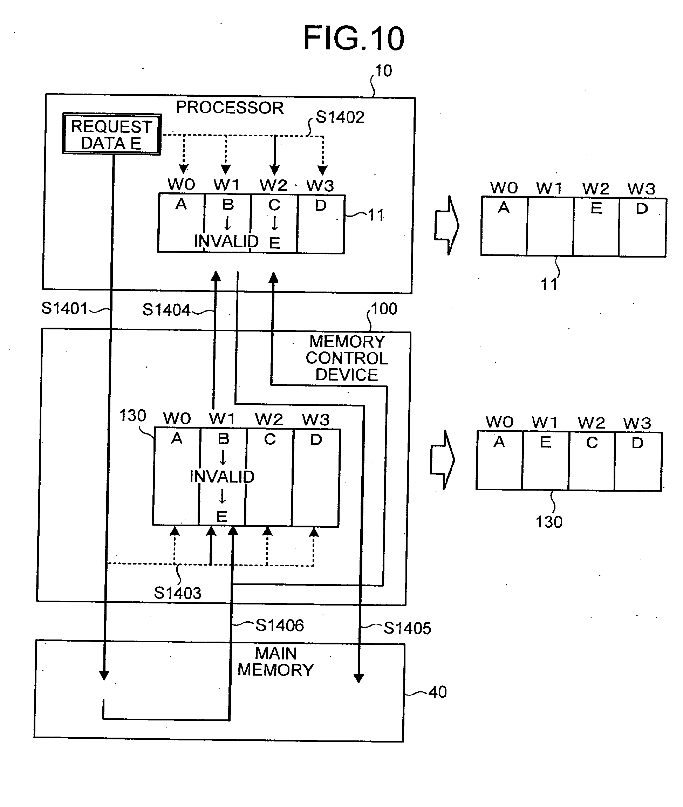

An example of a memory control scheme using BackEviction will be described below. Fig.10 is a schematic for explaining an example of a cache replace operation with BackEviction. Same reference numbers have been provided to parts that have same or similar configuration or perform same or similar functions as those shown in Fig. 9. In Fig. 10, it is assumed that the cache memory 11 of the processor 10 is controlled by a 4-Way, W0 to W3, set associative scheme and, that all the four Ways of a certain cache index are in valid state, and that data A to D are stored in the four Ways, respectively.

Assumed that the processor 10 requests data E of the same cache index as that of data A to D from the main memory 40 (step S1401). The processor 10 refers to the cache memory 11 to determine a position where the data E is stored in the cache. Since all the four Ways are valid, the processor 10 determines that any one of the Ways must be made invalid. Assumed that the processor 10 selects W2 as a block to be made invalid (step S1402). The memory control device 100 is not informed that the processor 10 has selected W2 as a block to be made invalid.

On the other hand, the memory control device 100 receives the request for the data E from the main memory 40 and refers to the TAG-RAM 130 to determine a position where address information of the data E is stored in the cache. Since all the Ways of the same cache index are valid, it is determined that any one Way must be made invalid. Assumed that W1 in which address information of the data B is stored is determined to be made invalid (step S1403).

In this case, the memory control device 100 requests the processor 10 to perform a cache excluding process for the Way in which the data B is stored (step S1404). In response to the request, the processor 10 performs a cache excluding process for W1 in which the data B is stored to thereby invalidate W1 (step S1405).

Thereafter, the main memory 40 sends the data E to the memory control device 100. The memory control device 100 receives the data E and stores address information of the data E in W1 of the TAG-RAM 130 and also sends the data E to the processor 10. The processor 10 receives the data E and stores the data E in W2. This completes the cache replace operation.

When the cache replace operation is performed in this manner, as shown in Fig. 10, the contents in W1 and W2 of the cache memory 11 are different from those in W1 and W2 of the TAG-RAM 130. However, since all the pieces of address information of the data stored in the cache memory 11 are stored in the TAG-RAM 130 as well, there is a consistency between the data. Because, when the memory control device 100 refers to the TAG-RAM 130, it is impossible that the latest data of the data A, E, and D are acquired from the main memory 40 although these data are present in the cache memory 11.

In this manner, even though a multiprocessor system includes a processor that does not communicate information related to the cache excluding process to the memory control device, in most of the cases the consistency between the data can be maintained by causing the memory control device to designate the processor to perform the cache excluding process. However, there are two exceptional cases in which a consistency between the data may not be maintained. These exceptional cases are described in detail below.

The first exceptional case is a case in which data of the same line is requested from another processor before completion of BackEviction. During BackEviction, although the latest data is present in the cache memory 11, there is a time period during which the block of the corresponding data of the TAG-RAM 130 is invalidated. If the same line as that of the data is requested from another processor during this period, the data is undesirably acquired from the main memory 40 so that old data, not the latest data, is acquired.

The second exceptional case is a case in which a line to be subjected to BackEviction is invalidated by autonomous move-out. A processor may autonomously exclude old data from a cache memory for the purpose of efficiently using the cache. When the data of the block invalidated by the autonomous move-out is unknowingly excluded again by BackEviction, the latest data on the main memory 40 can be overwritten with the old data.

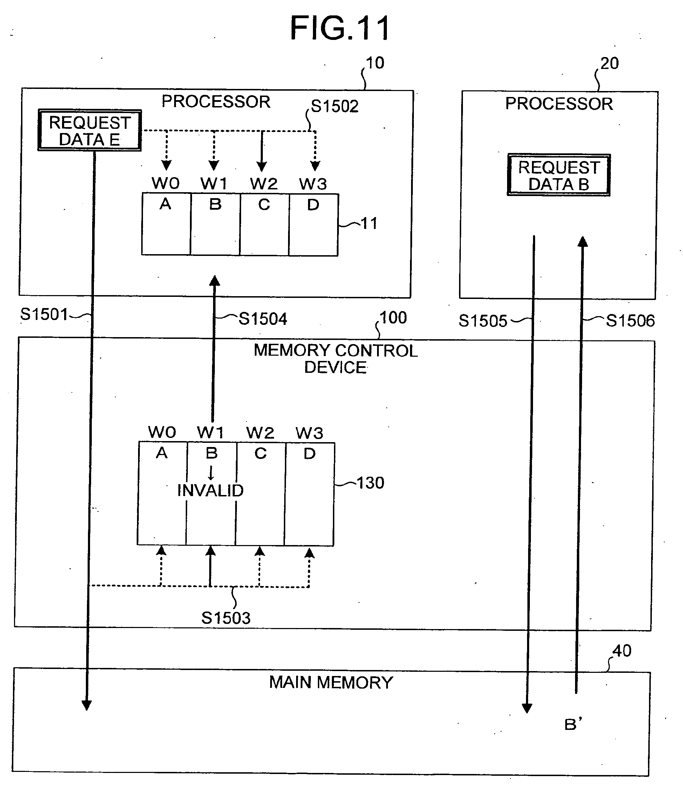

The two examples will be described below. Fig. 11 is a schematic for explaining an example of an operation performed when data of the same line is requested to be acquired from another processor before completion of BackEviction. It is assumed that all the four Ways of a certain cache index are in a valid state in the cache memory 11 of the processor 10, and that data A to D are stored in the four Ways, respectively.

Assumed that the processor 10 requests the data E of the same cache index as that of the data A to D from the main memory 40 (step S1501). The processor 10 refers to the cache memory 11 to determine a position where the data E is stored in the cache. Since all the four Ways are valid, it is determined that any one Way must be made invalid. Assumed that W2 is selected as a block to be made invalid (step S1502).

On the other hand, the memory control device 100, upon detecting that the processor 10 has requested the data E from the main memory 40, refers to the TAG-RAM 130 to determine a position where the data E is stored. Since all the four Ways of the same cache index are valid, it is determined that any one Way must be made invalid. In this case, it is determined that W1 in which address information of the data B is stored is to be made invalid (step S1503).

The memory control device 100 requests the processor 10 to perform a cache excluding process for the Way in which the data B is stored (step S1504). At this time, W1 of the TAG-RAM 130 is invalid. The latest data of the data B is present on the cache memory 11, and the cache excluding process is not yet over. Therefore, the old data that is not updated is stored in the main memory 40.

Assumed that another processor, the processor 20, requests the data B from the main memory 40 at this timing (step S1505). Since the block in which the data B of the TAG-RAM 130 is invalid, the data requested by the processor 20 is not hit in the TAG-RAM 130 so that it is determined that the data B is not present in the caches of all the processors. The data B acquired from the main memory 40 is acknowledged by the processor 20 (step S1506). Since the data is not the latest data B, inconsistency between the data occurs.

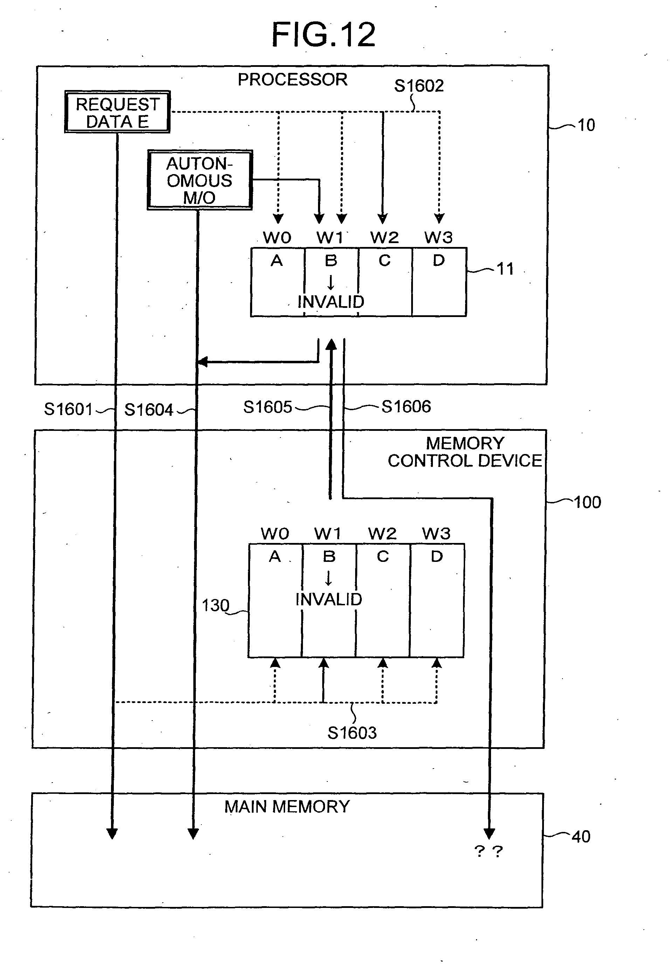

Fig. 12 is a schematic for explaining an example of an operation performed when a line subjected to BackEviction is invalidated by autonomous move-out. It is assumed that all the four Ways of a certain cache index are in a valid state, and that the data A to D are stored in the four Ways, respectively.

Assumed that the processor 10 requests the data E of the same cache index as that of the data A to D from the main memory 40 (step S1601). The processor 10 refers to the cache memory 11 to determine a position where the data E is stored in the cache. Since all the four Ways are valid, it is determined that any one Way must be made invalid. In this case, it is determined that W2 is selected as a block to be made invalid (step S1602).

On the other hand, the memory control device 100, upon detecting that the processor 10 has requested the data E from the main memory 40, refers to the TAG-RAM 130 to determine a position where the address information of the data E is stored. Since all the four Ways of the same cache index are valid, it is determined that any one Way must be made invalid. In this case, it is determined that W1 in which address information of the data B is stored is determined to be made invalid (step S1603).

Now, assumed that the processor 10 autonomously moves out the block in which the data B is stored (step S1604). As a result, W1 of the cache memory 11 in which the data B is stored is invalidated due to the move-out, so that the latest data B is stored in the main memory 40.

Moreover, assume that a cache excluding process request, which is performed to the processor 10 by the memory control device 100, of the Way in which the data B is stored is executed (step S1605). As a result, if the cache excluding process is executed to write the contents in W1 of the cache memory 11 in the main memory 40 (step S1606), the data B in the main memory 40 is overwritten with data which is not latest, and inconsistency between the data occurs.

Thus, the memory control scheme based on BackEviction may fail in the above-mentioned exceptional cases. A memory control scheme that does not fail even in the above-mentioned exceptional cases will be described below.

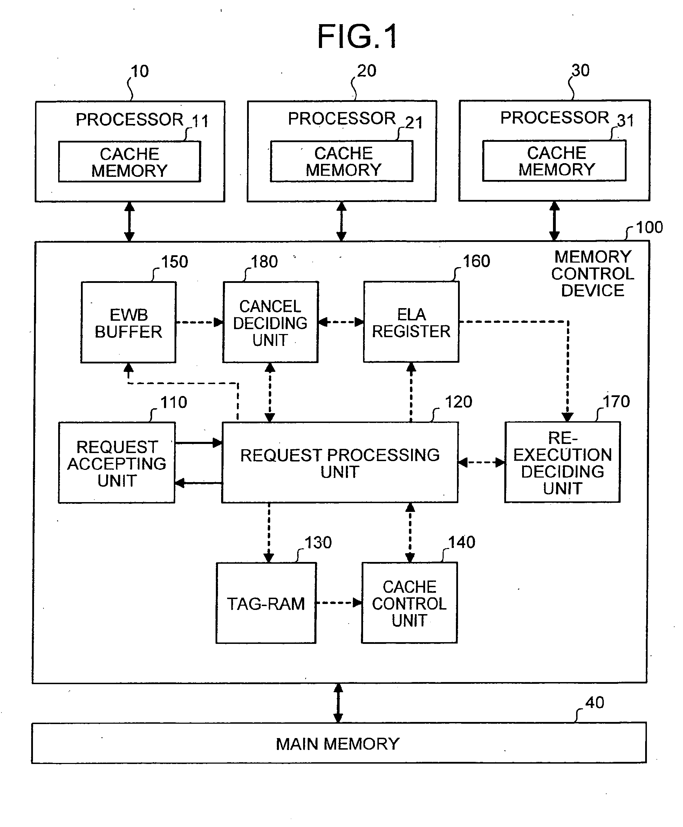

Fig. 1 is a functional block diagram of a memory control device 100 according to an embodiment of the present invention. The memory control device 100 communicates with, a plurality of processors, three processors 10 to 30 in Fig. 1, and the main memory 40.

The processors 10 to 30 are operational devices that perform various arithmetic operations. The processor 10 includes the cache memory 11, the processor 20 includes the cache memory 21, and the processor 10 includes the cache memory 31. It is assumed that these cache memories are managed by a 4-Way set associative scheme. Although three processors are shown in Fig. 1, the number is not limited to three. The main memory 40 is a storage device that temporarily stores data or computer programs that are used by the processors 10, 20, and 30.

The memory control device 100 inputs and outputs data between the main memory 40 and the cache memories 11, 21, and 31 according to requests from the processors 10, 20, and 30 and controls the storage devices not to cause inconsistency between data in the storage devices. The memory control device 100 includes a request accepting unit 110, a request processing unit 120, the TAG-RAM 130, a cache control unit 140, an EWB (Early Write Back) buffer 150, an ELA (Eviction Lock Address) register 160, a re-execution deciding unit 170, and a cancel deciding unit 180.

The EWB buffer 150 and the ELA register 160 correspond to an autonomous-exclusion-target data storing unit and an exclusion-target data storing unit, respectively.

The request accepting unit 110 is a receiving unit that accepts data input/output requests from the processors 10 to 30, and includes a plurality of ports. These ports monitor a processing status in the request processing unit 120 until the accepted data input/output requests are completed. The request processing unit 120 processes a request accepted by the request accepting unit 110, and is pipelined to perform parallel processing of a plurality of requests.

The TAG-RAM 130 is a storing unit that stores address information of data stored in the cache memories 11, 21, and 31. The cache control unit 140 compares address information of data requested to be input or output by the processors 10 to 30 with address information stored in the TAG-RAM 130 to determine an input/output destination or an input/output procedure of the data, updating contents of the cache memories 11, 21, and 31 and the TAG-RAM 130, and the like.

The EWB buffer 150 stores address information of data requested to be autonomously moved out by the processors 10, 20, and 30. The EWB buffer 150 stores the address information at the start of autonomous move-out and holds the address information until the autonomous move-out is completed.

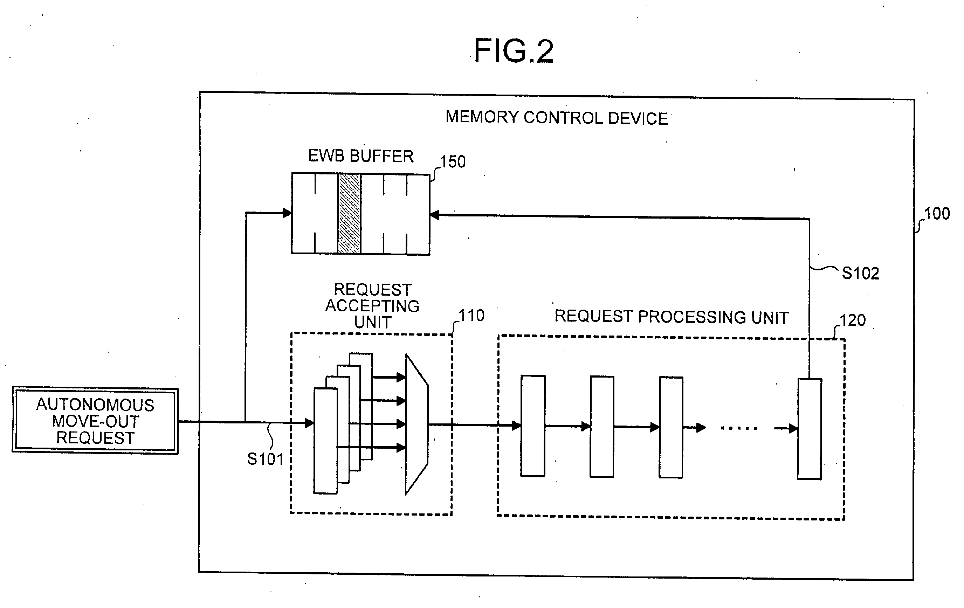

Fig. 2 is schematic for explaining a registering/releasing operation of the EWB buffer 150. When autonomous move-out is requested by one or more of the processors 10, 20, and 30, the requests are accepted by the request accepting unit 110, and address information of the data to be requested is stored in the EWB buffer 150 (step S101). When processing of the requests is completed by the request processing unit 120, the address information of the data to be requested is deleted from the EWB buffer 150 (step S102).

The ELA register 160 stores address information of data that is being subjected to a cache excluding process by BackEviction. In the ELA register 160, the address information to be processed is entry-registered at the start of the cache excluding process by BackEviction, and the entry is invalidated upon completion of the cache excluding process.

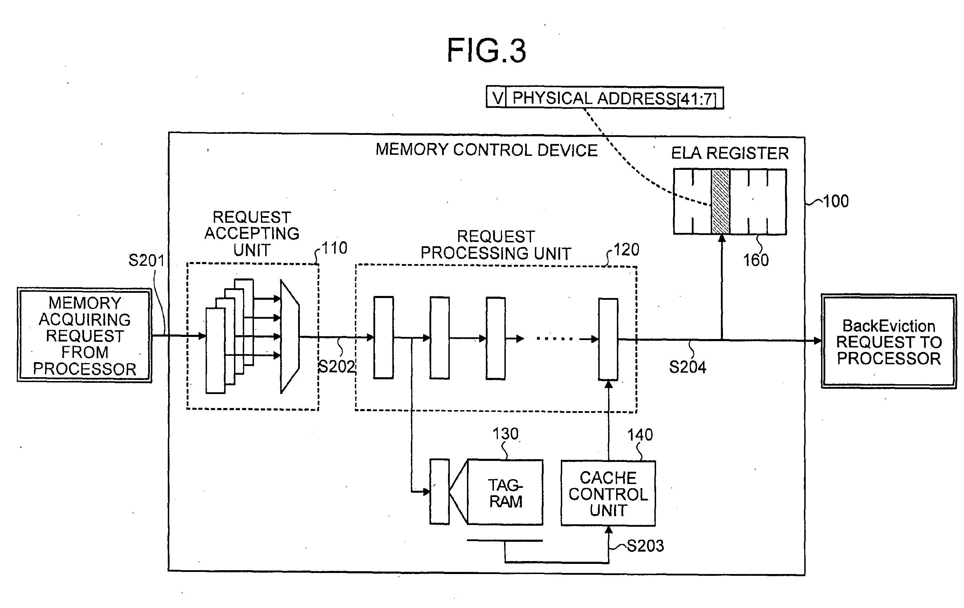

Fig. 3 is a schematic for explaining a registering operation of the ELA register 160. When a memory acquiring request is made by one of the processor 10, 20, and 30 (step S201), the request acquires any one of the ports of the request accepting unit 110. Thereafter, the request is put in the pipeline of the request processing unit 120 at a valid timing (step S202).

It is assumed that the cache control unit 140 searches the TAG-RAM 130 to check whether the requested data is cached in the cache memory 11, 21, or 31 and whether all the four Ways of a cache of the same index as that of the requested data are valid. In this case, the cache control unit 140 informs the request processing unit 120 that the requested data should be acquired from the main memory 40 and that a cache excluding process should be executed to secure a place where the acquired data is stored on the cache (step S203).

The request processing unit 120 receives the notice, transmits a data acquiring request to the main memory 40, and performs a cache excluding process request of data in the Way selected by the cache control unit 140 as a target subjected to a cache excluding process to a processor that requests the data. At this time, address information of the data stored in the Way selected as a target subjected to the cache excluding process is entry-registered in the ELA register 160 (step S204).

As shown in Fig. 3, each entry in the ELA register 160 has an area for storing a physical address and a valid bit (V bit) representing the validity of the entry. When address information is entry-registered, a process that transcribes the address information in the physical address area and turns on the valid bit is performed.

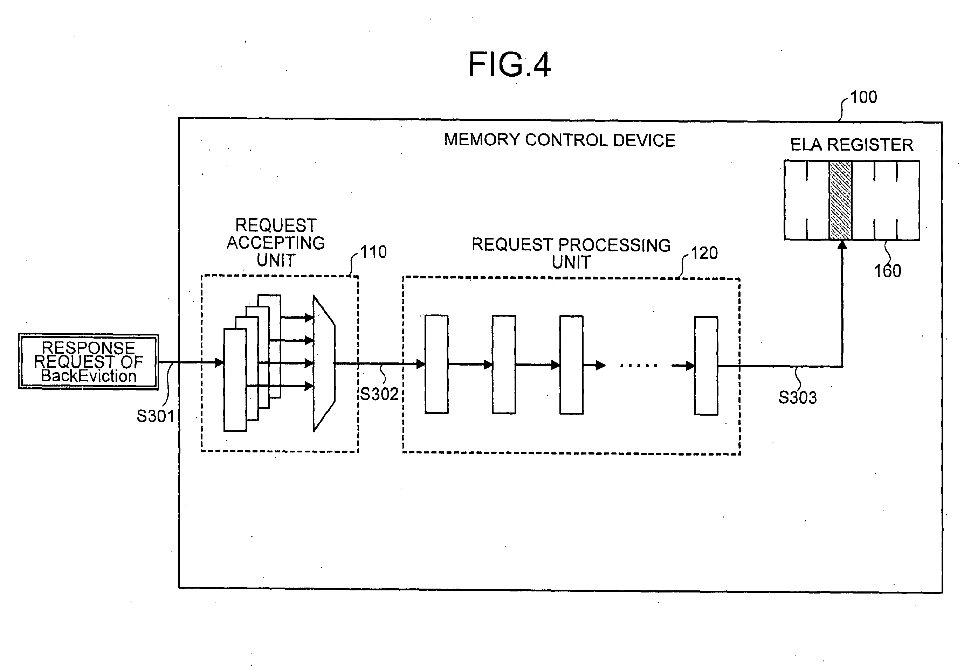

Fig. 4 is a schematic for explaining a releasing operation of the ELA register 160. When a response request corresponding to a cache excluding process request requested from a processor in step S204 is issued (step S301), the request acquires any one of the ports of the request accepting unit 110. Thereafter, the request is put in the pipeline of the request processing unit 120 at a valid timing (step S302).

Upon completion of the processing in the request processing unit 120, the request finds out an entry that stores an address of data subjected to a cache excluding process in the ELA register 160 and turns the valid bit of the entry (step S303).

The re-execution deciding unit 170 checks whether data requested with reference to the ELA register 160 is being processed by BackEviction when a memory acquiring request is made by a processor. When the data is being processed, the processing unit designates the request accepting unit 110 to re-execute the request.

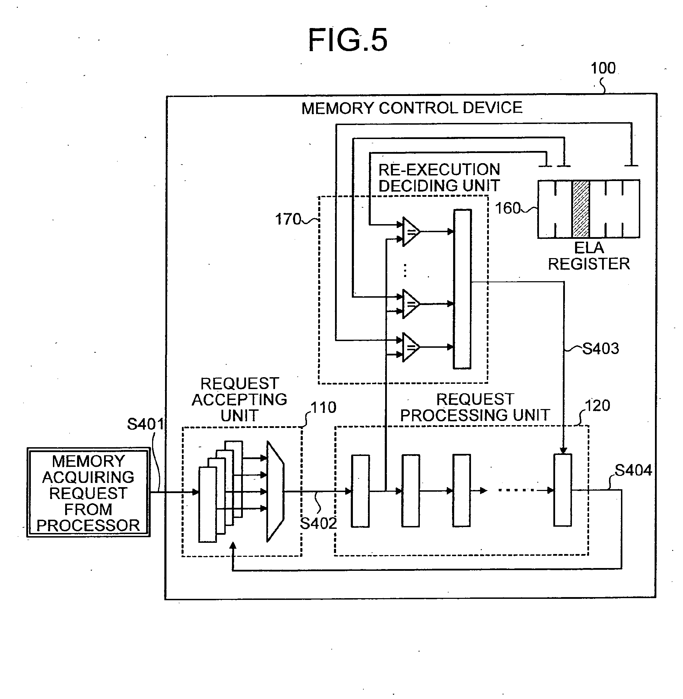

Fig. 5 is a schematic for explaining an operation of the re-execution deciding unit 170. In this case, it is assumed that data requested by a processor is being processed by BackEviction. Therefore, it is assumed that a block of the data in the TAG-RAM 130 is invalidated, and that the latest data in the cache memory of the processor is not written in the main memory 40. It is assumed that address information of the data is validly registered in the ELA register 160 by the operation in Fig. 3.

As shown in Fig. 5, when a memory acquiring request is made by any one of the processors 10, 20, and 30 (step S401), the request acquires any one of the ports of the request accepting unit 110. Thereafter, the request is put in the pipeline of the request processing unit 120 at a valid timing (step S402). Since the data is not hit in the TAG-RAM 130, the request processing unit 120 issues a data acquiring request to the main memory 40.

In this case, the re-execution deciding unit 170 searches the ELA register 160 to detect whether a valid entry having the same address as that of the requested data is present, and designates the request processing unit 120 to re-execute the processing (step S403). as a result, the memory acquiring request is returned to the request accepting unit 110 and put in the pipeline of the request processing unit 120 again (step S404). The operation performed by the re-execution deciding unit 170 at step S403 is repeated until BackEviction is completed to release the entry in the ELA register 160.

In this manner, an address of data that is being subjected to BackEviction is held in the ELA register 160, and the re-execution deciding unit 170 continuously designates data acquisition from the main memory to be re-executed while a valid entry having the same address as that of data requested to be acquired by a processor is present in the ELA register 160. As a result, inconsistency between data caused by invalidating data of the TAG-RAM 130 during the execution of BackEviction can be prevented.

The cancel deciding unit 180 checks whether data subjected to a cache excluding process is being excluded by autonomous move-out with reference to the EWB buffer 150 when a cache excluding process performed by BackEviction is requested by a processor. When the data is being excluded by the autonomous move-out process, the cache excluding process performed by BackEviction is stopped.

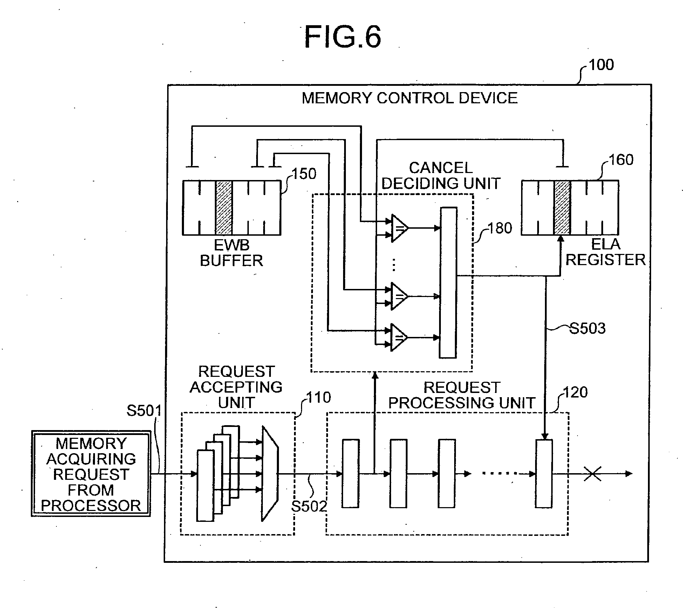

Fig. 6 is a schematic for explaining an operation of the cancel deciding unit 180. When a memory acquiring request is made by any one of the processor 10, 20, and 30 (step S501), the request acquires any one of the ports of the request accepting unit 110. Thereafter, the request is put in the pipeline of the request processing unit 120 at a valid timing (step S502). When the cache control unit 140 refers to the TAG-RAM 130, the cache control unit 140 determines that BackEviction is necessary. It is assumed that the request processing unit 120 registers the address of the data subjected to BackEviction in the ELA register 160 and requests the processor to perform a cache excluding process.

At this time, the cancel deciding unit 180 searches all the entries of the EWB buffer 150 to check whether an entry having the same address as that of data registered in the ELA register 160 is present. When the entry having the same address is present, the cancel deciding unit 180 turns off the valid bit of the entry in the ELA register 160 to cancel the request of the cache excluding process (step S503).

Thus, while an autonomous move-out request is stored in the EWB buffer 150, a cache excluding process for data to be moved out by the request is canceled by the cancel deciding unit 180. As a result, the latest data on the main memory 40 can be prevented from being overwritten with the old data by inappropriate BackEviction.

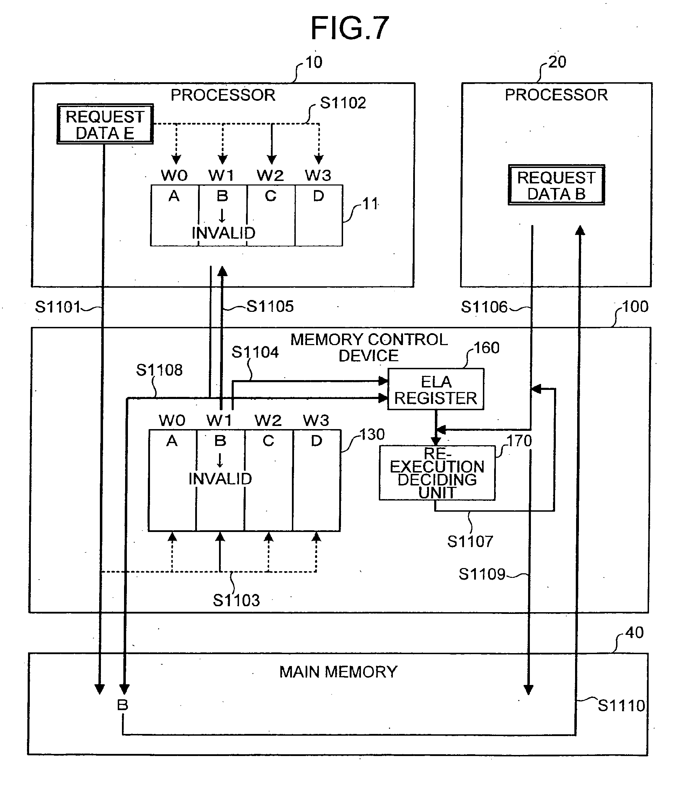

The operation of the memory control device 100 will be explained below. Fig. 7 is a schematic for explaining the operation performed by the memory control device 100 when data of the same line is requested from another processor before completion of BackEviction. Fig. 7 relates to the first exceptional case explained in connection with Fig. 11.

It is assumed that the processor 10 requests data E of the same cache index as that of data A to D from the main memory 40 (step S1101). The processor 10 refers to the cache memory 11 to determine a position where the data E is stored in the cache. Since all the four Ways are valid, it is determined that any one Way must be made invalid. In this case, it is assumed that W2 is selected as a block to be invalidated (step S1102).

On the other hand, the memory control device 100, upon detecting that the processor 10 has requested the data E from the main memory 40, refers to a TAG-RAM 130 to determine a position where address information of the data E is stored. Since all the four Ways are valid, it is determined that any one Way, must be made invalid. In this case, it is assumed that W1 in which address information of the data B is stored is determined to be invalidated (step S1103).

In this case, the memory control device 100 registers the address information of the data B subjected to a cache excluding process in the ELA register 160 (step S1104) and requests the processor 10 to perform a cache excluding process for the Way in which the data B is stored (step S1105). At this time, W1 of the TAG-RAM 130 is invalidated. In addition, the latest data of the data B is present on the cache memory 11, and the cache excluding process is not completed. Therefore, the old data, which is not updated, is stored in the main memory 40.

It is assumed that the processor 20 requests the data B from the main memory 40 at this timing (step S1106). Since the block in which the data B of the TAG-RAM 130 is invalidated, the data B requested by the processor 20 is not hit in the TAG-RAM 130. Therefore, the request processing unit 120 tries to acquire the data B from the main memory 40. However, the re-execution deciding unit 170, upon detecting that the address information of the data B being present in a valid entry in the ELA register 160, instructs the request processing unit 120 to re-execute the processing (step S1107). This re-execution of the processing is repeated while the valid entry that stores the address information of the data B is present.

Upon completion of the cache excluding process requested in step S1105, the latest data of the data B on the cache memory 11 is written in the main memory 40, and the corresponding entry in the ELA register 160 is invalidated (step S1108). The entry in the ELA register 160 is invalidated, so that the re-execution of the processing is not requested by the re-execution deciding unit. The main memory 40 is requested to acquire the data B (step S1109), and the data B is transmitted to the processor 20.

The data B transmitted here is the latest data written by the cache memory 11 of a processor 10, inconsistency between the data does not occur. In this manner, the memory control scheme according to the embodiment can maintain the consistency of the data even in the first exceptional case.

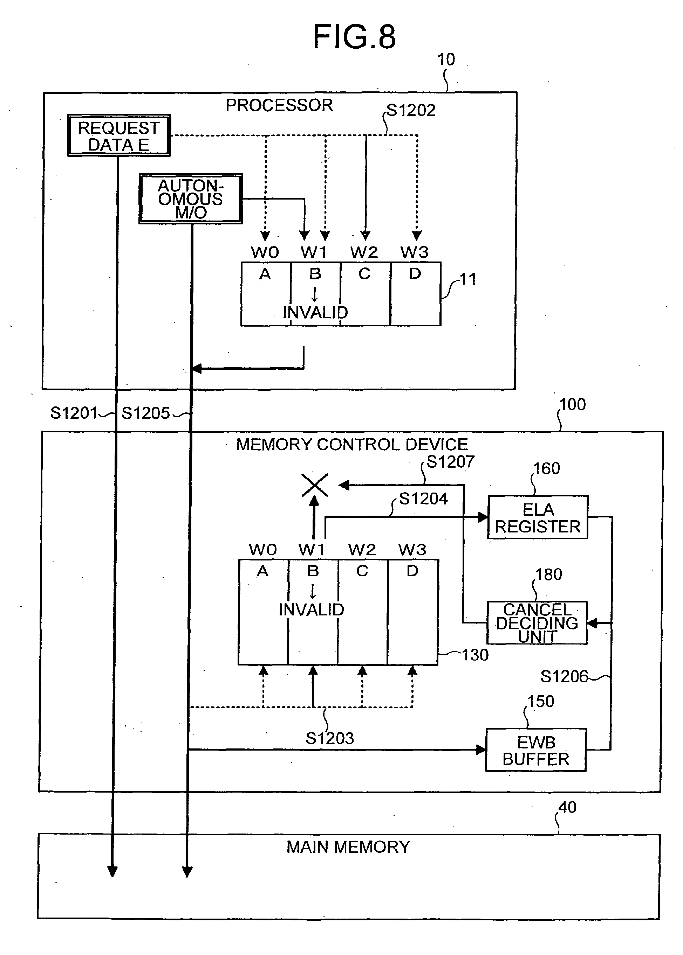

Fig. 8 is a schematic for explaining an example of an operation performed when a line subjected to BackEviction is invalidated by autonomous move-out. Fig. 8 relates to the second exceptional case that is explained with reference to Fig. 12.

It is assumed that the processor 10 requests data E of the same cache index as that of data A to D from the main memory 40 (step S1201). The processor 10 refers to the cache memory 11 to determine a position where the data E is stored in the cache. Since all the four Ways are valid, it is determined that any one Way must be made invalid. In this case, it is assumed that W2 is selected as a block to be invalidated (step S1202).

On the other hand, the memory control device 100, upon detecting that the processor 10 has requested the data E from the main memory 40, refers to the TAG-RAM 130 to determine a position where address information of the data E is stored. Since all the four Ways are valid, it is determined that any one Way must be made invalid. In this case, it is assumed that W1 in which address information of the data B is stored is determined to be invalidated (step S1203).

The request processing unit 120 invalidates W1 and registers the address information of the data B stored in W1 in the ELA register 160. The request processing unit 120 tries to request the processor 10 to perform a cache excluding process for the block in which the data B is stored (step S1204).

It is assumed that, at this timing, the processor 10 autonomously moves out the block in which the data B is stored. W1 of the cache memory 11 in which the data B is stored is invalidated by the move-out, so that the latest data B is stored in the main memory 40. Until the move-out is completed, the address information of the data B is held in the EWB buffer 150 (step S1205).

In this case, the cancel deciding unit 180 detects that the address information of the data B to be requested to be subjected to a cache excluding process is present in the entry in the EWB buffer 150 (step S1206). The cancel deciding unit 180 cancels the cache excluding process request of the block in which the data B for the processor 10 and releases the entry in the ELA register 160 (step S1207).

When the cache excluding process request is canceled, an inappropriate cache excluding process can be avoided from being executed to the block that is autonomously moved out. In this manner, the memory control scheme according to the embodiment can maintain the consistency of the data even in the first exceptional case.

As described above, the address information of the target data is stored in the ELA register 160 at the start of a cache excluding process performed by BackEviction. While an address of data requested to be acquired by a processor is present in the ELA register 160, the request processing unit continuously re-executes the data acquiring process. Therefore, even though data of the same line is requested by another processor before completion of Backeviction, inappropriate data is not acquired.

Moreover, the address information of the target information is stored in the EWB buffer 150 at the start of autonomous move-out performed by a processor. When an address of data subjected to BackEviction is present in the EWB buffer 150, a cache excluding process performed by BackEviction is stopped. Therefore, even though a line subjected to BackEviction is invalidated by autonomous move-out, inappropriate data is not overwritten in the main memory 40.

According to the present invention, consistency of data in the cache memories can be maintained even if processors that do not inform the memory control device of information related to the cache excluding process are used. Moreover, latency can be suppressed, the structure can be made simple.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. A memory control device that is connected between a main memory and a plurality of processors each having a cache memory and that controls access by the processors to the main memory, comprising:
a tag-information storing unit having a plurality of blocks that stores address information of data held in the cache memory, wherein the blocks can be validated or invalidated;
a request processing unit that processes a memory access request of the processors and that, when any one of the blocks of the tag-information storing unit must be invalidated, requests a processor of which the cache memory holds a to-be-excluded data, which is same as the data stored in the block of the tag-information storing unit that is to be invalidated, to perform a cache excluding process of excluding the to-be-excluded data from the cache memory to the main memory;
an exclusion-target data storing unit that, when the request processing unit requests the processor to perform the cache excluding process, stores address information of the to-be-excluded data in one entry until the processor completes the cache excluding process; and
a re-execution deciding unit that, when an acquisition route deciding process of acquiring data requested by the processors is fixed by the request processing unit and, checks the address information stored in the exclusion-target data storing unit and causes the request processing unit to re-execute the acquiring route deciding process of the data if address information of the requested data is included in any one of the entries.

2. The memory control device according to claim 1, wherein the re-execution deciding unit does not cause the request processing unit to re-execute the acquiring route deciding process when an address of data requested from any one of the processors does not conform to an address of data stored in any entry of the exclusion-target data storing unit.

3. The memory control device according to claim 1, further comprising:
a request accepting unit that accepts a memory access request from any one of the processors and designates the request processing unit to perform corresponding processing to the memory access request and monitors a processing status in the request processing unit until the corresponding processing is completed, and wherein
the request processing unit designates the request accepting unit to re-execute the corresponding processing when the re-execution deciding unit determines that the acquiring route deciding process must be re-executed.

4. The memory control device according to claim 1, wherein
the exclusion-target data storing unit includes a valid bit representing validity of data in each entry that holds information.

5. The memory control device according to claim 1, further comprising:
an autonomous-exclusion-target data storing unit that stores address information of target data of autonomous cache excluding process in which any one of the processors autonomously excludes cache data until the autonomous cache excluding process is completed; and
a cancel deciding unit that, when the request processing unit tries to request any one of the processors to perform a data excluding process, retrieves the address information stored in the autonomous-exclusion-target data storing unit and that causes the request processing unit to stop the request of the data excluding process when address information of data to be requested to be subjected to an excluding process by the request processing unit is included in any one of the entries.

6. The memory control device according to claim 5, wherein
the cancel deciding unit, when the request processing unit tries to request any one of the processors to perform a data excluding process, retrieves information stored in the autonomous-exclusion-target data storing unit and does not cause the request processing unit to stop the request of the excluding process when address information of data to be requested to be subjected to an excluding process by the request processing unit is not included in any one of the entries.

7. A method of controlling access to a main memory by a plurality of processors each having a cache memory, comprising:
processing a memory access request of the processors and, when any one of blocks of a tag information storing unit that holds address information of data held in a cache memory of a processor must be invalidated, requesting a processor of which the cache memory holds a to-be-excluded data, which is same as the data stored in the block of the tag-information storing unit that is to be invalidated, to perform a cache excluding process of excluding the to-be-excluded data from the cache memory to the main memory;
storing address information of the to-be-excluded data in one entry of an exclusion-target data storing unit until the processor completes the cache excluding process when the processor is requested at the processing step to perform the cache excluding process; and
checking the address information stored in the exclusion-target data storing unit, when an acquisition route deciding process of acquiring data requested by any one of the processors is fixed in the processing step and causing the processing step to be re-executed to as to re-execute the acquiring route deciding process of the data if address information of the requested data is included in any one of the entries.

8. The method according to claim 7, wherein the checking step does not cause the processing step to re-executed when an address of data requested from any one of the processors does not conform to an address of data stored in any entry of the exclusion-target data storing unit.

9. The method according to claim 7, further comprising:
storing in an autonomous-exclusion-target data storing unit address information of target data of autonomous cache excluding process in which any one of the processors autonomously excludes cache data until the autonomous cache excluding process is completed; and
checking the address information stored in the autonomous-exclusion-target data storing unit, when the processing step tries to request any one of the processors to perform a data excluding process, and causing the processing step to stop the request of the data excluding process when address information of data to be requested to be subjected to an excluding process at the processing step is included in any one of the entries.

10. The method according to claim 9, wherein
the checking step includes, when the processing step tries to request any one of the processors to perform a data excluding process, checking information stored in the autonomous-exclusion-target data storing unit, and not causing the processing step to stop the request of the data excluding process when address information of data to be requested to be subjected to an excluding process at the processing step is not included in any one of the entries.
